# EUROPÄISCHE PATENTSCHRIFT

(11) **EP 1 198 749 B1**
(45) Veröffentlichungstag und Bekanntmachung des Hinweises auf die Patenterteilung: **09.02.2005**
(21) Anmeldenummer: 00958123.2
(22) Anmeldetag: 10.07.2000
(51) Int. Cl.: G06F 11/32

(54) **VERFAHREN ZUM AUFBAU EINES BILDES FÜR EINE PROZESSVISUALISIERUNG**
METHOD FOR CONSTRUCTING AN IMAGE FOR THE VISUALISATION OF A PROCESS
PROCEDE SERVANT A CONSTITUER UNE IMAGE POUR UNE VISUALISATION DE PROCESSUS

(30) Priorität: 28.07.1999 DE 19935511
(43) Veröffentlichungstag der Anmeldung: 24.04.2002
(73) Patentinhaber: SIEMENS AKTIENGESELLSCHAFT, 80333 München (DE)
(72) Erfinder: FISCHER, Thomas, D-76831 Billigheim-Ingenheim (DE)
(86) Internationale Anmeldenummer: PCT/DE2000/002244
(87) Internationale Veröffentlichungsnummer: WO 2001/009725

(56) Entgegenhaltungen:
- EP-A- 0 770 945
- US-A- 5 408 603

## Beschreibung

Die Erfindung betrifft ein Verfahren zum Aufbau eines Bildes für eine Prozeßvisualisierung.

Es ist bereits bekannt, Softwarepakete zu erstellen, um zum Zwecke einer Prozeßvisualisierung real existierende Prozesse mittels eines Computers bedien- und beobachtbar zu machen. Hierzu werden prinzipiell neben der Visualisierungs-Software ein Daten-Manager und ein Automatisierungsgerät benötigt. Die Visualisierungs-Software bietet das Benutzerinterface, um mit dem realen Prozeß, bei dem es sich um kleine Maschinensteuerungen bis hin zu kompletten Kraftwerkssteuerungen handeln kann, in Verbindung treten zu können. Das Automatisierungsgerät stellt die Möglichkeit zur Ein- und Ausgabe von Daten bzw. zur Bearbeitung von Zuständen, wie Temperatur und Druck, zur Verfügung. Zur Erfassung derartiger Zustände werden Temperaturfühler und Sensoren eingesetzt. Der Daten-Manager stellt auf einer abstrakten Ebene den Zugriff auf reale Werte des Prozesses zur Verfügung. Hierbei kann man symbolische Namen für bestimmte Größen des Prozesses definieren, zu denen die Prozeßvariablen gehören. Der Daten-Manager besitzt eine Kommunikationsmöglichkeit zu dem Automatisierungsgerät. Mittels des Benutzerinterfaces kann man Graphiken bzw. Bilder projektieren, die den realen Prozeß symbolisieren. Man kann die Prozeßvariablen darstellen und auch ändern.

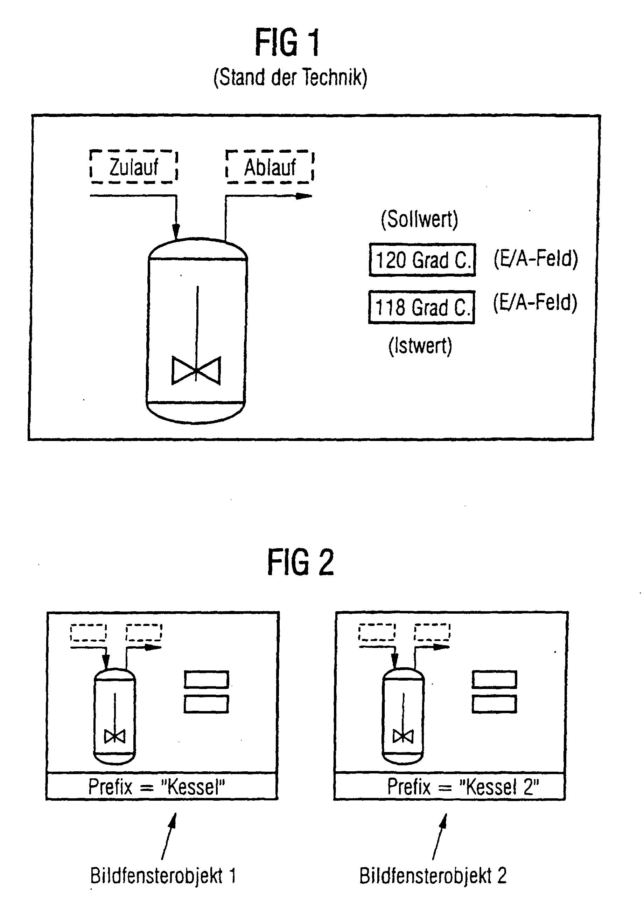

Ein Beispiel für eine derartige bekannte Prozeßvisualisierung ist in der Figur 1 dargestellt. Ein Kessel besitzt einen Zulauf, einen Ablauf, einen Heizer und einen Rührer. Die Prozeßväriablen sind "Kessel.Sollwert" und "Kessel.Istwert".

In der Visualisierungs-Software gibt es graphische Objekte. Diese besitzen eine Anzahl von Eigenschaften, d.h. Properties. Die Properties sind nun über die genannten Prozeßvariablen dynamisierbar. Beim gezeigten Beispiel ist die Prozeßvariable "Kessel.Sollwert" mit dem Property "Wert" des Ein/Ausgabefeldes "Sollwert" und die Prozeßvariable "Kessel. Istwert" mit dem Property "Wert" des Ein/Ausgabefeldes "Istwert" verknüpft. Ändert sich nun die Temperatur des Kessels, so wird der geänderte Temperaturwert in dem Bild angezeigt. Will man den Temperatursollwert des Kessels ändern, so kann man das über eine Bedienung an dem Objekt "Sollwert" tun.

Ein Nachteil einer derartigen Vorgehensweise, bei der ein komplettes Bild bereits bei der Projektierung komplett mit den vorhandenen Prozeßvariablen verknüpft wird, besteht darin, daß ein projektiertes Bild nur ein einziges Mal verwendbar ist. Sind beispielsweise an einem Prozeß mehrere gleichartige Kessel beteiligt, dann müssen mehrere gleichartige Graphiken entworfen werden, die sich nur in der jeweiligen Prozeßvariablen-Anbindung unterscheiden.

Die US 5,408,603 offenbart ein Verfahren zur dynamischen Visualiesierung von Prozeßvariablen in Bildern.

Der Erfindung liegt die Aufgabe zugrunde, ein Verfahren zur Generierung eines zusammengesetzten Bildes für eine Prozeßvisualisierung anzugeben, bei dem die oben beschriebenen Nachteile nicht auftreten.

Diese Aufgabe wird durch ein Verfahren mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere in der Wiederverwendbarkeit von bereits projektierten Bildern bzw. Bildbausteinen. Weiterhin bedarf es keiner aufwendigen Programmierung, mittels welcher ebenfalls eine Wiederverwendbarkeit von bereits projektierten Bildern erreicht werden könnte. Ferner sind bereits projektierte Bilder durch eine Änderung des jeweiligen Präfixes in einfacher Weise änderbar. Ferner kann ein Präfix gemäß der Erfindung auch von einer Script-Engine ausgewertet werden, die in einem Script Prozeßvariablen liest und bearbeitet.

Weitere vorteilhafte Eigenschaften der Erfindung ergeben sich aus der Erläuterung eines Ausführungsbeispiels anhand der Figur 2.

Gemäß der Erfindung wird ein Bild bei seiner Projektierung nicht komplett, sondern nur teilweise mit den vorhandenen Prozeßvariablen verbunden. Dieses Bild wird in einem Bildfensterobjekt dargestellt. Das Bildfensterobjekt kann im Sinne der Bild-im-Bild-Technik ein komplettes Bild in einem Vater-Bild darstellen. Ein dem Bildfensterobjekt zugeordnetes Property ist der Präfix. Dieser Präfix wird im Rahmen der Projektierung eines Bildfensterobjektes definiert. Während des späteren Prozesses erfolgt die Verknüpfung der Variablenanbindung mit dem Präfix, d.h. die Bildung der Gesamtvariablenanbindung bestehend aus Präfix und der bereits bei der Projektierung erstellten Variablenteilanbindung.

Beim gezeigten Beispiel wird im Rahmen der Projektierung des Bildes lediglich die Teilvariablenanbindung ".Sollwert" mit dem Property "Wert" des E/A-Feldes "Sollwert" durchgeführt. Ein dem Bildfensterobjekt 1 zugeordnetes Präfix wird auf den Wert "Kessel" gesetzt. Erst bei der Ladung des Bildes zur Bildschirmanzeige während des Prozesses wird die Prozeßvariable "Kessel.Sollwert" durch eine Verknüpfung der beiden Teilstrings "Kessel" und ".Sollwert" gebildet.

Ein einem Bildfensterobjekt 2 zugeordnetes Präfix lautet "Kessel2". Bei der Ladung des zugehörigen Bildes zur Bildschirmanzeige wird die zugehörige Prozeßvariable "Kessel2.Sollwert" durch eine Verknüpfung der beiden Teilstrings "Kessel2" und "Sollwert" gebildet.

In beiden Fällen wurde der Teilstring "Sollwert" bereits während der Projektierung des Bildes mit dem Property "Wert" des E/A-Feldes "Sollwert" verknüpft, während die Verknüpfung mit dem jeweiligen Präfix erst bei der Ladung des Bildes bzw. dem Bildaufschlag erfolgt.

Bei Verwendung einer derartigen Technik kann beispielsweise ein Kesselbild dynamisch ohne die Notwendigkeit einer Umprojektierung auf verschiedene gleichartige Kessel eines Prozesses verschaltet werden. Mittels eines derartigen Vorgehens können ganze Prozeßhierarchien realisiert werden, da das Property "Präfix" stets von außen nach innen weitergegeben wird, beispielsweise zur Bildung des Gesamtstrings "Teilanlage1.Kesselhaus1.Kessel1.Sollwert".

In vorteilhafter Weise kann das genannte Präfix auch von einer Script-Engine ausgewertet werden, die in einem Script Prozeßvariablen liest und bearbeitet. Dies kann beispielsweise zur Erstellung einer Historie oder auch zur Berechnung eines Durchschnittswertes verwendet werden. Auch in diesem Fall ist es beim Vorliegen mehrerer Kessel nicht mehr nötig, bei mehreren projektierten Bildern jeweils zugehörige Scripte zu ändern, da auch für den Script-Code das jeweils zugehörige Präfix verwendet werden kann.

## Patentansprüche

1. Verfahren zum Aufbau eines mindestens eine Prozessvariable darstellen Bildes für eine Prozessvisualisierung, bei welchem das Bild in einem Bildfensterobjekt dargestellt wird und mindestens ein grafisches Objekt unit mindestens einer dynamisierbaren Eigenschaft aufweist, **dadurch gekennzeichnet dass**
- während der Projektierung des Bildes dem Bildfensterobjekt ein Präfix und der dynamisierbaren Eigenschaft ein Teilstring derart zugeordnet werden, dass sich aus dem Präfix gefolgt von dem Teilstring der Name der Prozeßvariablen ergibt; und
- erst beim Bildaufschlag während des späteren Prozesses die Verknüpfung des Präfix mit dem Teilstring und dadurch die Anbindung der Prozeßvariablen an die dynamisierbare Eigenschaft vorgenommen wird.

2. Verfahren nach Anspruch 1, **dadurch gekennzeichnet , dass** das Bild aus Graphik und Text besteht.

3. Verfahren nach einem der vorhergehenden Ansprüche, **dadurch gekennzeichnet , dass** zur Projektierung weiterer Bilder jedem dieser weiteren Bilder ein Präfix zugeordnet wird.

4. Verfahren nach einem der vorhergehenden Ansprüche, **dadurch gekennzeichnet, dass** mittels eines projektierten Script-Codes unter Verwendung des Präfixes Prozessvariablen erfasst und einer Verarbeitung zugeführt werden.

## Claims

1. Method for constructing an image representing at least one process variable for a process visualization, in which the image is displayed in an image window object and features at least one graphical object with at least one property that can be rendered dynamic, **characterized in that**
- during the inclusion of the image in the project a prefix and the property than can be made dynamic are assigned a part string such that the prefix followed by the part string produces the name of the variable; and
- only on image display during the subsequent process is the prefix linked to the part string and thereby the process variables to the dynamizable property.

2. Method in accordance with Claim 1, **characterized in that** the image consists of graphics and text.

3. Method according to one of the previous claims **characterized in that**, for planning further imagesinto the project, a prefix is assigned to each of these further images.

4. Method according to one of the previous claims **characterized in that** process variables are recorded and routed for processing using the prefix by means of a script code included in the project.

## Revendications

1. Procédé de constitution d'une image représentant au moins une variable de processus pour la visualisation d'un processus, dans lequel l'image est représentée dans un objet de fenêtre d'image et comporte au moins un objet graphique présentant au moins une propriété dynamisable, **caractérisée en ce que**, pendant la projection de l'image, un préfixe est associé à l'objet de fenêtre d'image et une chaîne partielle est associée à la propriété dynamisable de telle sorte que le nom des variables de processus est obtenu à partir du préfixe suivi de la chaîne partielle ; et c'est seulement pendant la constitution de l'image pendant le processus ultérieur que l'on procède à la combinaison du préfixe avec la chaîne partielle et de cette façon à la liaison des variables de processus avec la propriété dynamisable.

2. Procédé selon la revendication 1, **caractérisé en ce que** l'image est constitué d'un graphique et d'un texte.

3. Procédé selon l'une des revendications précédentes, **caractérisé en ce que**, pour la projection d'autres images, un préfixe est associé à chacune de ces autres images.

4. Procédé selon l'une des revendications précédentes, **caractérisé en ce que** des variables de processus sont détectées au moyen d'un code de script projeté en utilisant le préfixe et sont envoyées à un traitement.
